(19) 

Europäisches
Patentamt
European
Patent Office
Office européen
des brevets

(11) **EP 1 785 792 A1**

(12) **EUROPEAN PATENT APPLICATION**

(43) Date of publication:
**16.05.2007 Bulletin 2007/20**

(51) Int Cl.:
***G05B 19/19*** *(2006.01)*

(21) Application number: **05077586.5**

(22) Date of filing: **11.11.2005**

| | |
|---|---|
| (84) Designated Contracting States: **AT BE BG CH CY CZ DE DK EE ES FI FR GB GR HU IE IS IT LI LT LU LV MC NL PL PT RO SE SI SK TR** Designated Extension States: **AL BA HR MK YU** (71) Applicant: **C.C.M. Beheer B.V. 5674 CC Nuenen (NL)** | (72) Inventor: **Beltman, Arend-Jan Johan 5685 GD Best (NL)** (74) Representative: **Houben, Christiaan Hein Willem Frans Exter Polak & Charlouis B.V. P.O. Box 3241 2280 GE Rijswijk (NL)** |

(54) **Method and system for control of a compliant system**

(57)    The invention relates to the control of an actuator system comprising an actuator and a load that is connected to the actuator by a drive chain comprising a compliant element. The load is positioned by controlling the actuator, which control of the actuator comprises at least the feeding of one or more reference signals to the actuator. To compensate for drive chain compliancy the invention proposes to generate a main reference signal component based on performance specifications of the system and to generate an additional reference signal component, which is adapted to compensate for predetermined jerks induced in the actuator system by the main reference component. The main reference signal and the additional reference signal are superimposed and fed to the actuator.

Fig.2

EP 1 785 792 A1

**Description**

The present invention relates to a control method for an actuator mechanism, wherein the actuator mechanism comprises an actuator, e.g. a servo- or stepper motor, and a movable end, also referred to as the load, that is positioned by controlling the actuator.

In many structures the drive chain between the motor and the load will comprise two or more inertia systems connected through compliant elements, wherein the compliant element is defined as a spring-damper element. The compliance can be the result of gears or other non-stiff connecting elements in the drive chain.

For many purposes it is desirable to accurately position the movable end.

It is known to use feedback control loop to achieve an accurate positioning of the load. However in many applications, e.g. in a pick and place robot it is not possible to directly measure the position of the end point during use, which makes feedback control based on the load position impossible. In other applications it would in theory be possible to measure the load position, but this often requires high quality and thus expensive measurement means to ascertain a robust functioning of the actuator mechanism, which leads to an overall expensive solution. Furthermore, the controllability of the actuator mechanism based on the load position is reduced, because of fase shift effects.

In general the motor position can be accurately measured or otherwise be determined. Thus feedback control based on the measured motor position is possible. However, such a solution will in general not provide the desired performance of the system, because the compliance between the motor and the load in the actuator mechanism will give rise to a tracking error and oscillations which result in a long settling time.

From EP 1 338 937 it is known a servo control method for a flexible structure with two or more inertia systems connected through spring elements. In the control method a reference generator with feedforward control is used to improve the follow up ability to references.

The present invention has for an object to provide an improved control method for an actuator mechanism.

This object is achieved by a method according to the preamble of claim 1, wherein a main reference signal component is generated based on performance specifications of the system and an additional reference signal component is generated which is adapted to compensate for predetermined jerks induced in the actuator system by the main reference component, wherein the main reference signal and the additional reference signal are superimposed and fed to the actuator.

By a priori knowledge about mechanical behaviour of the actuator system a suitable additional reference component can be determined, which when used as an input for the actuator can compensate for the compliancy in the actuator system. In particular, jerks, which are the result of increasing and decreasing the force or torque of the actuator when the load is moved to a certain position, are forseeable because the main accceleration reference component is generally a priori known. The jerks in combination with the compliancy in the actuator system are the main cause of oscillations and tracking errors of the load. This effect can be compensated by superposition of the additional reference which is shaped to compensate them on the main reference component.

Preferably as a main reference signal a main acceleration reference signal component is generated based on performance specifications of the system and as an additional reference signal an additional acceleration reference signal component is generated adapted to compensate for predetermined jerks induced during time periods of the main acceleration reference component in which the acceleration is increasing or decreasing.

One particular aspect of the invention is that the main acceleration reference signal component and the additional acceleration reference signal component are used as a feed-forward input signal for the actuator. This aspect is in particular advantageous for application with actuators in servosystems. If necessary the acceleration reference signals can be weighted by suitable static gains representing a mass to transform the acceleration signals into a force signal which can be fed to the actuator. The use of the control method according to the invention, makes it possible to operate the servo actuator system with a broader bandwidth than heretofore, thus improving disturbance rejection.

Another particular aspect of the invention is that a position reference signal is generated which is used as an input for the actuator, wherein the position reference signal is generated by superposition and double integration of the main acceleration reference signal component and the additional acceleration reference signal component. This aspect is in particular advantageous to control stepper motor systems, where the result of double integration and superposition of said acceleration reference signals preferably is fed as a sole reference signal to the stepper motor. The drive chain compliancy compensation strategy according to the invention is particularly advantageous to systems with a stepper motor since heavy vibrations of the load, demanding a lot from the electromagnetic stiffness of the motor, are eliminated. This makes it possible to use existing, relatively low cost hardware in the drive chain, while accurate motion control is obtainable.

Preferably, the main acceleration reference component is generated having a positive slope, being a time period during which the acceleration is linearly increased, and/or a negative slope, being a time period during which the acceleration is decreased, and wherein the additional acceleration reference component comprises a pulse tandem comprising a positive acceleration pulse and a consecutive negative acceleration pulse during a positive slope of the main acceleration reference component and a pulse tandem comprising a negative acceleration pulse and a consecutive positive acceleration pulse during a negative slope of the main acceleration reference component.

It is preferred that the positive pulse and the negative pulse of each acceleration pulse tandem respectively cover one half of the slope period.

The invention further relates to a control system according to claim 13.

The invention also relates to a control system according to claim 16.

The control systems according to the invention are well adapted to compensate for the compliancy and provides a good performance without the use of expensive components.

The invention will be described in further detail in the following description with reference to the accompanying drawing, in which:

Fig. 1 shows a schematic representation of a force actuator system with a compliant element,

Fig. 2 shows a block diagram of a control system according to one aspect of the invention, in particular for servosystems,

Fig. 3 shows a block diagram of a preferred embodiment of a reference generating arrangement for the control system of Fig. 2,

Fig. 4a shows a profile of a main acceleration component of an acceleration reference signal generated according to the invention,

Fig. 4b shows a profile of an additional acceleration component of an acceleration reference signal generated according to the invention,

Fig. 4c shows a profile of the acceleration reference signal generated according to the invention by superposition of the components of Fig. 4a and Fig. 4b,

Fig. 5a shows in a diagram a the response of a control system without the additional acceleration reference component,

Fig. 5b shows in a diagram a the response of a control system with the additional acceleration reference component according to the invention,

Fig. 6 shows a typical schematic representation of a stepper motor with a compliant element,

Fig. 7 shows a block diagram of a control system according to the invention for the stepper motor of Fig. 6,

Fig. 8 shows a block diagram of a preferred embodiment of a reference generating arrangement for the control system of Fig. 7, and

Fig. 9 shows in a diagram a the response error of a control system with the additional acceleration reference component according to the invention, and without the additional acceleration reference component.

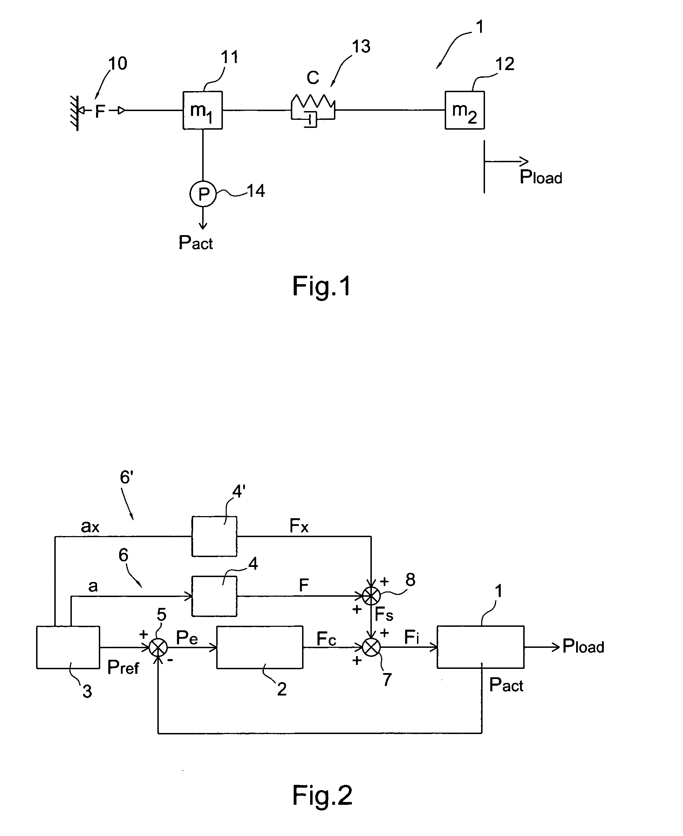

In general an actuator mechanism can be modelled in terms of so called lumped mass elements. In Fig. 1 is shown a such an actuator system 1 which comprises a force actuator 10, a first mass $m_1$ indicated by reference numeral 11 which is coupled in a stiff manner with the force actuator 10, and a second mass $m_2$ indicated by reference numeral 12 which is coupled to the first mass 11 by a compliant element 13, comprising a spring-damper combination. The series of components between the force actuator 10 and the end point of the second mass 12 is called the drive chain of the actuator system 1.

The force actuator 10 in this example is a servomotor. The position of the servomotor can be measured by means of a position sensor 14 which as an output has a signal $P_{act}$ representing the actual position of the actuator 10.

In Fig. 2 is shown a control system for controlling the servo-actuator system 1 as shown in Fig. 1. In Fig. 2 the actuator system 1 is represented by a block. Further, the control system comprises a controller 2, a reference generating arrangement 3 and a feed-forward gains 4 and 4'.

The controller 2 and the actuator system 1 are comprised in a feedback loop in which the measured output signal $P_{act}$ by a negative feedback path is compared to the to a position reference signal $P_{ref}$ that is generated by the reference generating arrangement 3. This is done by feeding the measured actuator position $P_{act}$ and the position reference $P_{ref}$ to a difference determiner 5 where a position error signal $P_e$ is created, which serves as an input for the controller 2. In response to the error signal $P_e$, the controller 2 generates a control signal $F_c$ representing a force which serves as an input for the actuator system 1.

The controller 2 is preferably a PID (Proportional Integral Differential) controller, which are commonly used.

The reference generating arrangement 3 generates acceleration reference signals $a$ and $a_x$ which are fed forward by a feedforward paths 6 and 6' to the actuator system 1. Since the input of the motor is a signal representing a force, the acceleration signals $a$ and $a_x$ are tranformed in the feedforward paths 6 and 6' into a signal F and $F_x$ respectively representing a force by means of static gain components 4 and 4'. The static gain 4 is based on the total mass (thus $m_1$ and $m_2$) of the system 1. The static gain 4' is based on the first mass 11 only. The force signals $F$ and $F_x$ are superimposed at a summing point 8 which results in a force signal $F_s$.

The feedforward signal $F_s$ and the control signal $F_c$ in the shown embodiment are not directly fed to the actuator system 1, but are used as an input of a summing point 7. The output of the summing point 7 is connected to the input of the actuator system 1, such that the sum of the feedforward signal $F_s$ and the control signal $F_s$ serves as an input signal $F_i$ for the actuator system 1.

The position of the end point, also called load position of the actuator system 1 is in Figs. 1 and 2 indicated by $P_{load}$. This load position $P_{load}$ is an output of the system 1 which in general during operation is not measured.

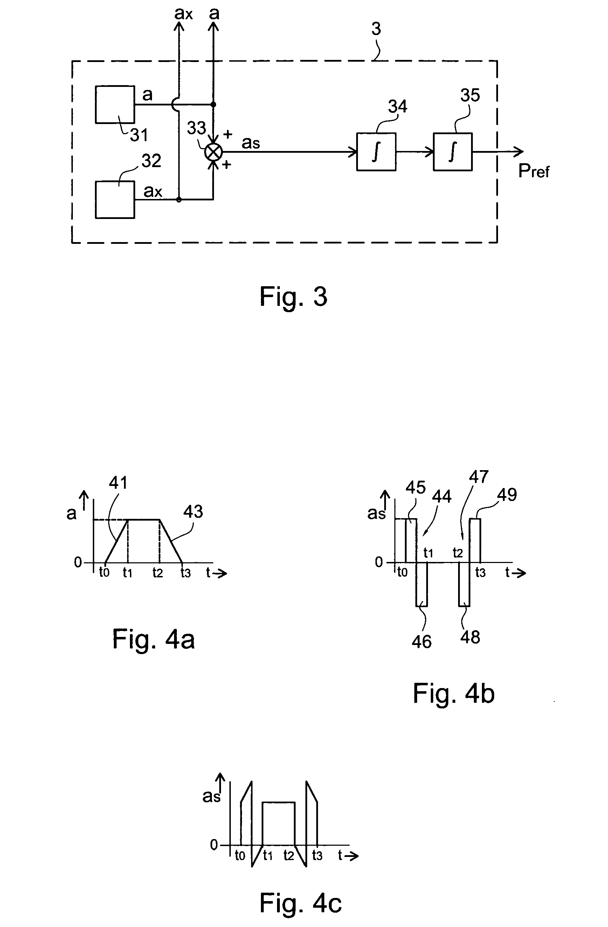

In Fig. 3 an example of a reference generating arrangement 3 is schematically illustrated. The reference generating arrangement 3 comprises a first reference generator 31 and a second reference generator 32.

The first reference generator 31 is preferably a third order reference generator which generates a main acceleration reference signal component $a$ which when set out against the time t has a trapezoid profile as is depicted in Fig. 4a. The shape and values of the main acceleration reference signal component a is based on performance specifications of the system. In Fig. 4a is illustrated clearly that in a first time period $t_0$-$t_1$ the main acceleration $a$ increases linearly and thus results in a positive slope 41 of the profile in that period. In a second time period $t_1$-$t_2$ the main acceleration reference component $a$ remains constant. In a third time period $t_2$-$t_3$, the acceleration reference component $a$ decreases linearly, which results in a negative slope 43 of the profile in that period.

The second reference generator 32 generates an additional acceleration reference signal component $a_x$. The second reference generator 32 is synchronised with the first reference generator 31. The additional acceleration reference signal component $a_x$ comprises a first pulse tandem 44 comprising a positive acceleration pulse 45 and a consecutive negative acceleration pulse 46, which occur in the first time period $t_0$-$t_1$. Further the additional acceleration reference signal component $a_x$ comprises a pulse tandem 47 comprising a negative acceleration pulse 48 and a consecutive positive acceleration pulse 49 during the third time period $t_2$-$t_3$. The positive acceleration pulse 45, 49 and the corresponding negative acceleration pulse 46, 48 each cover one half of the time period concerned.

The acceleration reference signal components $a$ and $a_x$ serve as feedforward signals for the feedforward paths 6 and 6' as described hereabove. Furthermore they serve as an input signal of a summing point 33 where they are superimposed. The superposition of the synchronised signals $a$ and $a_x$ results in an acceleration reference signal $a_s$ as is depicted in Fig. 4c. In Fig. 4c is clearly illustrated that the pulse tandems 44 and 47 of the additional acceleration reference signal component $a_x$ are superimposed on the positive slope 41 and the negative slope 43 respectively of the main acceleration reference signal component $a$.

The reference generating arrangement 3 comprises two integrators 34 and 35 which are in series. By integrating the acceleration reference $a_s$ twice by means of the integrators 34 and 35 a position reference signal $P_{ref}$ is obtained, which is fed to the feedback loop at the difference determining element 5 (see Fig. 1).

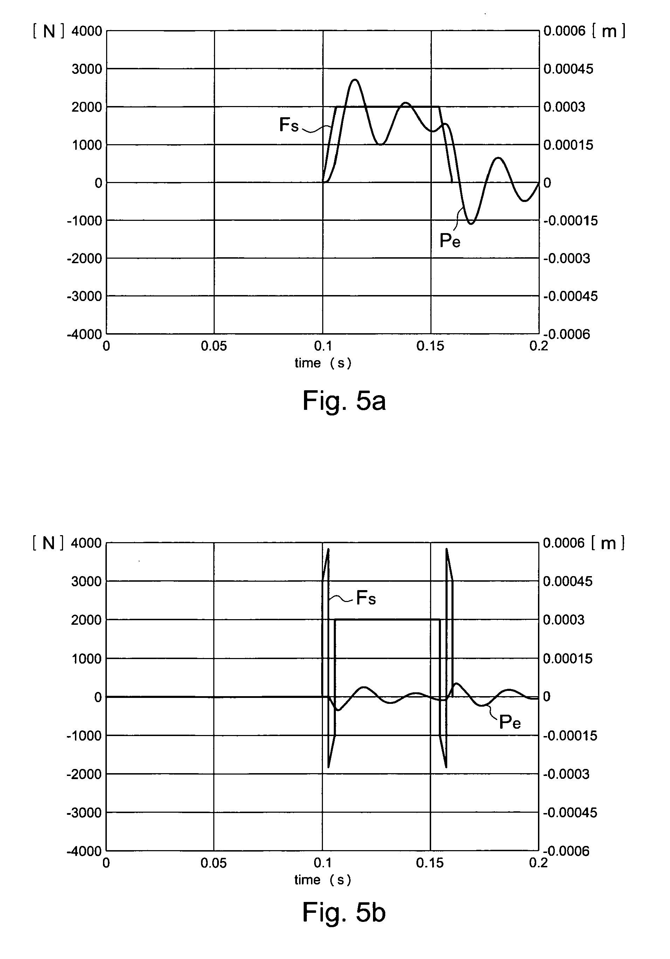

The main acceleration reference signal component $a$ has a profile which is conventionally used as a reference feedforward for actuators like servomotors. The slopes 41 and 43 in the profile of the main acceleration reference signal component $a$ each represent a jerk that is fed by the feedforward path 6 to the actuator system 1. In Fig. 5a is illustrated for comparison reasons what the response of the actuator system 1 is to an acceleration reference signal feedforward $a_s$ that exclusively contains the signal $a$ which is shown in Fig. 4a. The tracking error grows because the compliant element 13 in the actuator system 1 has to be pretensioned before the second mass 12 starts to react to the reference and the reference feedforward.

In Fig. 5b is illustrated the response of the actuator system 1 to the force feedforward signal $F_s$, wherein the additional acceleration reference signal component $F_x$ is added to the main acceleration reference signal component F. Comparison of the responses in Fig. 5a and Fig. 5b clearly illustrates the positive effect of the additional feedforward component $a_x$ on the reduction of the settling time and the tracking error with respect to the conventional feedforward.

A suitable value for the additional acceleration reference signal component $a_x$ for the control system can be determined real time in a trial and error procedure. The pulse height is set and the response of the system to the reference signals ($p_{ref}$, $a_s$) is observed. This is repeated until the response of the system indicates that a good performance of the sytem will be achieved.

In alternative method a suitable pulse height is determined by calculation of the pulse height with use of known system parameters and the main acceleration reference component.

The pretensioning of the most compliant element can be parametrized as follows:

$$\Delta = m_2 \cdot a/C, \qquad\qquad (eq.1)$$

wherein C is the stiffnes in N/m of the most compliant element in the system, $a$ is the main acceleration component in m/s$^2$, and $m_2$ is the mass in kg of the second mass (see Fig. 1). During jerk the pretensioning can be compensated by the additional acceleration component $a_x$:

$$\Delta = 2 \cdot (\tfrac{1}{2} \cdot a_x \cdot t_x{}^2), \qquad\qquad (eq.2)$$

wherein $t_x = \tfrac{1}{2} \cdot a/j$, with $j$ being the jerk in m/s$^3$.
By solving the equations eq.1 and eq.2 results:

$$a_x = 4 \cdot m_2 \cdot j^2 / (a \cdot C), \qquad\qquad (eq.3)$$

which is used to calculate the height of the pulses shown in Fig. 4b based on the system parameters $m_2$ and C and the signal parameters $j$ and $a$.

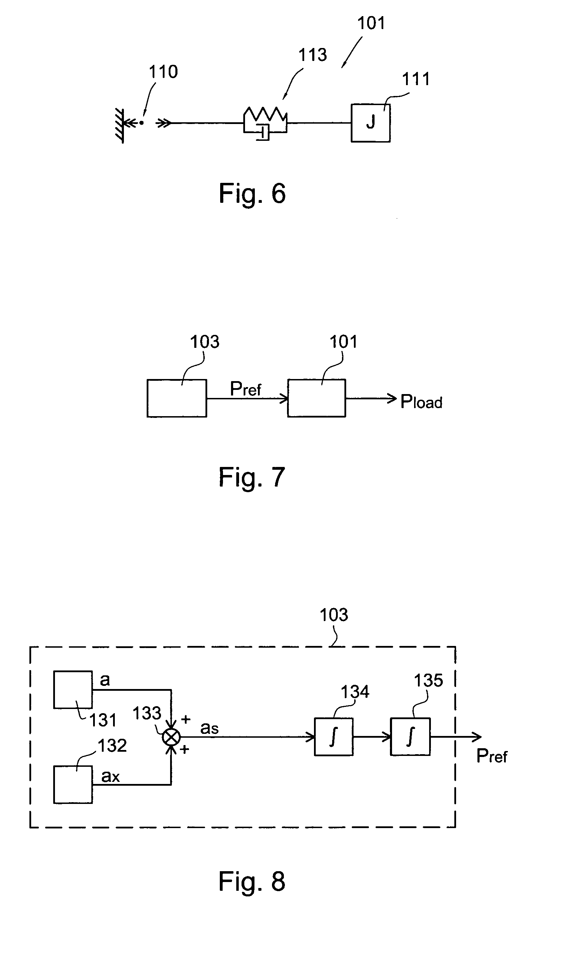

In Fig. 6 is shown in a typical schematic representation a stepper motor 101, having a position actuator 110, which in case of a stepper motor comprises a rotative electromagentic field. The stepper motor 101 further has an electromagnetic motor stiffness k which is illustrated by the compliant element 113. Further the stepper motor 101 has an inertia 111, which constitutes the load of the illustrated stepper system 101.

In Fig. 7 is shown that the stepper motor 101 is controlled by an open loop control method. The control system comprises the stepper motor 101 and a reference generating arrangement 103. The reference generating arrangement 103 generates a position reference signal $P_{ref}$ which serves as an input for the position actuator 110 of the stepper motor 101. Unlike the previous described servosystem, the controlled stepper system of Fig. 7 does not have a feedback loop and an acceleration feedforward.

In Fig. 8 an example of a reference generating arrangement 103 is schematically illustrated. The reference generating arrangement 103 comprises a first reference generator 131 and a second reference generator 132.

The first reference generator 131 is preferably a third order reference generator which generates a main acceleration reference signal component $a$ which when set out against the time t has a trapezoid profile as is depicted in Fig. 4a. The shape and values of the main acceleration reference signal component a is based on performance specifications of the system. In Fig. 4a is illustrated clearly that in a first time period $t_0$-$t_1$ the main acceleration $a$ increases linearly and thus results in a positive slope 41 of the profile in that period. In a second time period $t_1$-$t_2$ the main acceleration reference component $a$ remains constant. In a third time period $t_2$-$t_3$, the acceleration reference component $a$ decreases linearly, which results in a negative slope 43 of the profile in that period.

The second reference generator 132 generates an additional acceleration reference signal component $a_x$. The second reference generator 132 is synchronised with the first reference generator 131. The additional acceleration reference signal component $a_x$ comprises a first pulse tandem 44 comprising a positive acceleration pulse 45 and a consecutive negative acceleration pulse 46, which occur in the first time period $t_0$-$t_1$. Further the additional acceleration reference signal component $a_x$ comprises a pulse tandem 47 comprising a negative acceleration pulse 48 and a consecutive positive acceleration pulse 49 during the third time period $t_2$-$t_3$. The positive acceleration pulse 45, 49 and the corresponding negative acceleration pulse 46, 48 each cover one half of the time period concerned.

The acceleration reference signal components $a$ and $a_x$ serve as an input signal of a summing point 133 where they are superimposed. The superposition of the synchronised signals $a$ and $a_x$ results in an acceleration reference signal $a_s$ as is depicted in Fig. 4c. In Fig. 4c is clearly illustrated that the pulse tandems 44 and 47 of the additional acceleration reference signal component $a_x$ are superimposed on the positive slope 41 and the negative slope 43 respectively of the main acceleration reference signal component $a$.

The reference generating arrangement 103 comprises two integrators 134 and 135 which are in series. By integrating the acceleration reference $a_s$ twice by means of the integrators 134 and 135 a position reference signal $P_{ref}$

is obtained, which is fed to the actuator system 101 (see fig. 7). It is stressed here that the integrators are depicted here schematically as function components which can correspond to a physical component, but also be incorporated in a software application run on a microcomputer or any other suitable piece of equipment.

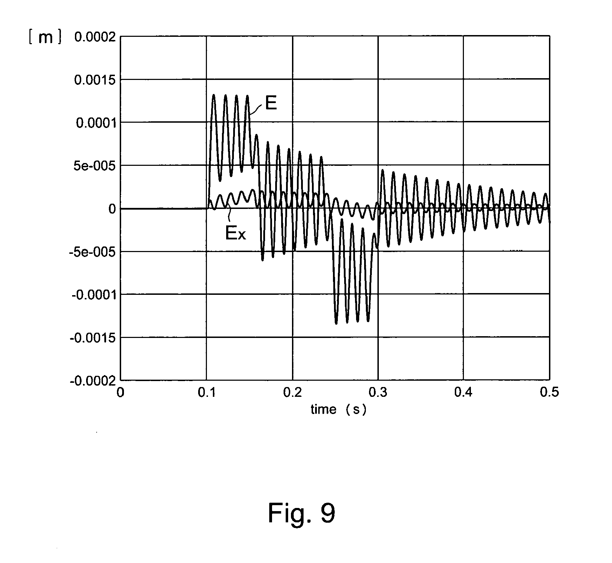

In Fig. 9 are set out angainst the time the load position error $E_x$ and E of the inertia 111 respectively with and without the use of the additional acceleration reference component $a_x$. It is apparent that the the use of the additional component $a_x$ improves the performance of the open loop controlled stepper system of Fig. 7, even though the combined acceleration signal $a_s$ is integrated twice.

A suitable value for the additional acceleration reference signal component $a_x$ for the control system for the stepper system can be determined real time in a trial and error procedure as is described hereabove. However it is also possible to use the equations (Eq.1)-(Eq.3) to determine the suitable value. In those equations the value for $m_2$ has to be replaced by the inertia J and the value for C has to be replaced by the stiffness $k$.

The reference generation is both for the servo system 1 as for the stepper system 101 based on the common concept of drive chain compliancy compensation. The reference generating arrangement 103 for the stepper system 101 thus operates substantially the same as the reference generating arrangement 3 for the servo system 1.

In the above is used the terminology "force", "acceleration", and "position". It is noted here that these terms do not only refer to translational movements, but also to their equivalents in rotational movements, i.e. "torque", "angular acceleration", and "angular displacement" respectively.

It also has to be understood that the control system or parts thereof can comprise software instructions to be executed on one or more microcomputers, microprocessors, microcontrollers or any other electronical programmable component or components. It is also possible to have one or more parts of the control system implemented in hardware such as e.g. electronic circuitry.

### Claims

1. Method for controlling an actuator system (1; 101) comprising an actuator (10; 110) and a load (12, 111) that is connected to the actuator (10; 110) by a drive chain comprising a compliant element (13; 113), wherein the load (12; 111) is positioned by controlling the actuator (10; 110), which control of the actuator (10; 110) comprises at least the feeding of one or more reference signals to the actuator (10; 110), **characterized in that** a main reference signal component is generated based on performance specifications of the system and an additional reference signal component is generated which is adapted to compensate for predetermined jerks induced in the actuator system by the main reference component, wherein the main reference signal and the additional reference signal are superimposed and fed to the actuator (10; 110).

2. Method according to claim 1, wherein a main acceleration reference signal component ($a$) is generated based on performance specifications of the system and an additional acceleration reference signal component ($a_x$) is generated adapted to compensate for predetermined jerks induced during time periods of the main acceleration reference component ($a$) in which the acceleration is increasing or decreasing.

3. Method according to claim 2, wherein the main acceleration reference signal component ($a$) and the additional acceleration reference signal component ($a_x$) are used as a feed-forward input signal for the actuator (10).

4. Method according to claim 3, wherein further a position reference signal ($p_{ref}$) is generated which is fed to a position control feedback loop for the actuator position.

5. Method according to claim 4, wherein the position reference signal ($p_{ref}$) is generated by superposition and double integration of the main acceleration reference signal component ($a$) and the additional acceleration reference signal component ($a_x$).

6. Method according to claim 2, wherein a position reference signal ($p_{ref}$) is generated which is used as an input for the actuator (110), and wherein the position reference signal ($p_{ref}$) is generated by superposition and double integration of the main acceleration reference signal component ($a$) and the additional acceleration reference signal component ($a_x$).

7. Method according to any of the preceding claims, wherein the main acceleration reference component ($a$) is generated having a positive slope (41), being a time period during which the acceleration is linearly increased, and/or a negative slope (43), being a time period during which the acceleration is decreased, and wherein the additional acceleration reference component ($a_x$) comprises a pulse tandem (44) comprising a positive acceleration pulse (45) and a consecutive negative acceleration pulse (46) during a positive slope (41) of the main acceleration reference component ($a$) and a pulse tandem (43) comprising a negative acceleration pulse (48) and a consecutive positive acceleration pulse (49) during a negative slope (43) of the main acceleration reference component ($a$).

8. Method according to claim 7, wherein the positive pulse (45, 49) and the negative pulse (46, 48) of each acceleration pulse tandem (44, 47) respectively cover one half of the slope period ($t_0$-$t_1$, $t_2$-$t_3$).

9. Method according to claim 7 or 8, wherein before regular use the optimal height of the acceleration pulses (45, 46, 47, 48) is determined by a trial and error procedure.

10. Method according to claim 7 or 8, wherein before regular use the optimal height of the acceleration pulses is determined by calculations based on known system and signal parameters.

11. Method according to any of the claims 7-10, wherein the main acceleration reference ($a$) has a trapezoidal shape with a first time period ($t_0$-$t_1$) in which the acceleration is linearly increased, a second time period ($t_1$-$t_2$) in which the acceleration is kept constant and a third time period ($t_2$-$t_3$) in which the acceleration is lineraly decreased.

12. Method according to claim 4, wherein in the position feedback loop is used a PID controller.

13. Control system comprising:

    - a feedback loop comprising an actuator system (1) and a controller (2), the actuator system (1) comprising an actuator (10), and a load (12) that is connected to the actuator by a drive chain comprising a compliant element (13), wherein the feedback loop is arranged to control the actuator position in response to a position reference signal ($P_{ref}$),
    - one or more feed-forward paths (6, 6') to provide a force representing feed-forward signal ($F_s$) to the actuator input in response to one or more acceleration reference signals ($a, a_x$),
    - at least one reference generating arrangement (3) for generating the position reference signal ($P_{ref}$) and the one or more acceleration reference signals ($a, a_x$),

    **characterized in that**
    the reference generating arrangement (3) comprises

    - a first reference generator (31) for generating a main acceleration reference signal component ($a$),
    - a second reference generator (32) for generating an additional acceleration reference signal component ($a_x$) adapted to compensate for predetermined jerks induced during time periods of the main acceleration reference component ($a$) in which the acceleration is increasing or decreasing.

14. Control system according to claim 13, wherein the one or more feedforward paths (6, 6') comprises a static gain element (4, 4') to transform each of the one or more acceleration reference signals ($a, a_x$) into a signal ($F, F_x$) representing a force.

15. Control system according to claim 13 or 14, wherein the control system comprises a summing point (8) for generating the feedforward signal ($F_s$) by superposition of the output signals of the static gain elements (4, 4').

16. Control system comprising:

    - an actuator system (101) comprising an actuator (110), and a load (111) that is connected to the actuator (110) by a drive chain comprising a compliant element (113),
    - at least one reference generating arrangement (3) for generating a position reference signal ($P_{ref}$),

    wherein the control system is arranged to control the actuator position in response to a position reference signal ($P_{ref}$), the reference generating arrangement (3) comprising

    - a first reference generator (31) for generating a main acceleration reference signal component ($a$),
    - a second reference generator (32) for generating an additional acceleration reference signal component ($a_x$) adapted to compensate for predetermined jerks induced during time periods of the main acceleration reference component ($a$) in which the acceleration is increasing or decreasing, and

- a series connection of a summing point (33) and two integrators (34, 35) for generating the position reference signal ($p_{ref}$) in response to the main acceleration reference signal ($a$) and the additional acceleration reference signal ($a_x$).

**17.** Control system according to any of the claims 13-16, wherein the reference generating arrangement (3; 103) comprises a series connection of a summing point (33; 133) and two integrators (34, 35; 134, 135) for generating the position reference signal ($p_{ref}$) in response to the main acceleration reference signal ($a$) and the additional acceleration reference signal ($a_x$).

**18.** Control system according to any of the claims 13-17, wherein the first reference generator (31; 131) is a third order reference generator for generating a trapezoidal shaped main acceleration reference signal ($a$).

**19.** Control system according to any of the claims 13-18, wherein the first reference generator (31; 131) and the second reference generator (32; 132) are synchronised and the second reference generator (32; 132) is arranged to generate an acceleration pulse tandem (44) comprising a positive acceleration pulse (45) and a consecutive negative acceleration pulse (46) during a positive slope (41) of the main acceleration reference component ($a$) and a pulse tandem (47) comprising a negative acceleration pulse (48) and a consecutive positive acceleration pulse (49) during a negative slope (43) of the main acceleration reference component ($a$).

**20.** Method for determining a suitable value additional acceleration reference signal component ($a_x$) for a control system according to any of the claims 13-21, wherein in a trial and error procedure a pulse height is set and the response of the system to the reference signals ($P_{ref}$, $a_s$) is observed and wherein the procedure is repeated until the response of the system indicates that a suitable pulse height is found.

**21.** Method for determining a suitable value additional acceleration reference signal component ($a_x$) for a control system according to any of the claims 13-21, wherein known parameters of the actuator system and the main acceleration reference signal component ($a$) are used to calculate the suitable pulse height.

Fig.1

Fig.2

Fig. 3

Fig. 4a

Fig. 4b

Fig. 4c

Fig. 5a

Fig. 5b

110    113    101
111
J

## Fig. 6

103    101
$P_{ref}$    $P_{load}$

## Fig. 7

103
131    133    +    134    135
a    $a_s$    ∫    ∫
132    +    $P_{ref}$
$a_x$

## Fig. 8

Fig. 9

**European Patent Office**

## EUROPEAN SEARCH REPORT

Application Number

EP 05 07 7586

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LAMBRECHTS P ET AL: "Trajectory planning and feedforward design for electromechanical motion systems" CONTROL ENGINEERING PRACTICE, PERGAMON PRESS, OXFORD, GB, vol. 13, no. 2, February 2005 (2005-02), pages 145-157, XP004560097 ISSN: 0967-0661 | 1-4, 7-15, 18-21 | INV. G05B19/19 |
| A | * the whole document * | 5,6,16, 17 | |
| X | US 6 341 244 B1 (PAPIERNIK WOLFGANG) 22 January 2002 (2002-01-22) | 1-4, 12-15, 20,21 | |
| A | * column 6, line 24 - column 7, line 21; figure 1 * | 5-11, 16-19 | |
| X | EP 1 437 637 A (FANUC LTD) 14 July 2004 (2004-07-14) | 1-4, 12-15, 20,21 | |
| A | * paragraphs [0017] - [0035]; figures 1-3 * | 5-11, 16-19 | |
| X | US 2004/238758 A1 (ANTONIUS THEODORUS DAMS JOHANNES ADRIANUS) 2 December 2004 (2004-12-02) | 1-4, 12-15, 20,21 | |
| A | * the whole document * | 5-11, 16-19 | |

TECHNICAL FIELDS SEARCHED (IPC)

G05B
G05D

The present search report has been drawn up for all claims

| Place of search | Date of completion of the search | Examiner |
|---|---|---|
| Munich | 12 April 2006 | Vaño Gea, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 07 7586

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2006

| Patent document cited in search report | | Publication date | Patent family member(s) | | Publication date |
|---|---|---|---|---|---|
| US 6341244 | B1 | 22-01-2002 | AT | 199787 T | 15-03-2001 |
| | | | WO | 9815880 A1 | 16-04-1998 |
| | | | DE | 59606606 D1 | 19-04-2001 |
| | | | EP | 0931283 A1 | 28-07-1999 |
| | | | KR | 2000048977 A | 25-07-2000 |
| EP 1437637 | A | 14-07-2004 | JP | 3739749 B2 | 25-01-2006 |
| | | | JP | 2004213472 A | 29-07-2004 |
| | | | US | 2004135536 A1 | 15-07-2004 |
| US 2004238758 | A1 | 02-12-2004 | CN | 1550908 A | 01-12-2004 |
| | | | JP | 2004343115 A | 02-12-2004 |
| | | | SG | 115683 A1 | 28-10-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1338937 A